# EUROPEAN PATENT APPLICATION

(11) **EP 4 790 448 A1**
(43) Date of publication of application: **12.08.2026**
(21) Application number: 26156322.5
(22) Date of filing: 04.02.2026
(51) Int. Cl.: G01S 7/40, G01B 11/275

(54) **APPARATUS FOR CALIBRATING AN ADVANCED DRIVER ASSISTANCE SYSTEM SENSOR OF A VEHICLE**

(30) Priority: 07.02.2025 IT 202500002361
(71) Applicant: NEXION S.p.A., 42015 Correggio (RE) (IT)
(72) Inventor: RICCI, CARMINE, POVIGLIO (REGGIO EMILIA) (IT); NICOLINI, ROBERTO, RIO SALICETO (REGGIO EMILIA) (IT)
(74) Representative: Conti, Marco

(57) **Abstract**

An apparatus (1) for calibrating a sensor of an advanced driver assistance system - ADAS - of a vehicle (9) operatively positioned in a service area (8), comprises: a base unit (2), movable on a supporting surface (80); a support structure (3) connected to the base unit (2); a calibration device (4) connected to the support structure (3) to calibrate the ADAS sensor and provided with a calibration panel (40) having a front surface facing towards the service area (8); a graphical interface (5) associated with the support structure (3); a service camera (10) connected to the support structure (3) and oriented in such a way that a field of view of the service camera (10) includes a part of the service area between the support structure (3) and the vehicle (9); a control unit, connected to the service camera (10) and to the graphical interface (5) to provide service information, including the images captured by the service camera (10), in real time through the graphical interface (5).

## Description

This invention relates to an apparatus for calibrating an advanced driver assistance system sensor of a vehicle. In particular, by vehicle is meant a motor vehicle, motor car, lorry, truck or any other wheeled land vehicle or means of transportation. Known in the prior art relating to the calibration of sensors of advanced driver assistance systems, commonly known as ADAS, are apparatuses positionable in front of the vehicle sensor and configured to perform a calibration procedure. The term ADAS sensors includes radar sensors or optical sensors (cameras) used in safety systems designed to prevent collisions or, for example, sensors used in vehicle cruising speed control systems. The calibration apparatuses of the prior art are generally provided with elements which serve as targets for said vehicle sensors; for example, a target may be a panel which bears graphical features predetermined by the manufacturer of the vehicle or of the sensor. To be calibrated, the cameras of the vehicle are subjected to a calibration procedure via software while they frame the target. Otherwise, a target may be a mirror used to calibrate the radar sensor of the vehicle. Otherwise, calibration apparatuses use reflective prisms or Doppler simulators. The target (also called *calibration device*) is usually movable relative to the floor and/or relative to the main structure of the calibration apparatus so it can be positioned correctly and precisely relative to the vehicle. In effect, every manufacturer lays down the calibration specifications by defining a specific calibration position indicating the relative position between vehicle and target; thus, for each vehicle, a user responsible for calibration must move the calibrating apparatus and/or the target to the position specified by the vehicle manufacturer. Mutually positioning the calibration device and the vehicle correctly relative to each other is of fundamental importance because the ADAS sensors require high precision, and imprecise calibration can lead to safety problems, especially when the vehicle is running.

In some solutions, mutually positioning the vehicle and the target relative to each other in order to calibrate the ADAS sensor is guided and automatically controlled. In other solutions, positioning may be carried out manually by the user. In that case, precise positioning is even more problematic and inconvenient, and the user needs to be skilled and experienced. Positioning can be particularly critical when the calibration panel is large in size. In effect, since the panel is movable to a position between the operator and the vehicle, the operator's view is at least partly obstructed. Another critical aspect is when the calibration distance between the vehicle and the target is minimal (or zero). Moreover, manoeuvring and positioning the calibration structure may be highly time consuming. To more effectively overcome these drawbacks, some solutions have been proposed in the prior art and are described in documents WO2024105614A1, EP3655796B1, EP1953519B1, EP1927865A1, DE102009009046A1, US11473906B2 and EP2233365B1. These documents describe calibrating apparatuses provided with assisted positioning systems, both manual and automatic. For example, the systems described consist of cameras mounted on the calibrating apparatus in order to allow the user to view specific reference points positioned in the service area where the vehicle is located (or positioned on the vehicle itself). These documents also describe the possibility of taking a measurement indicating a distance, for example a translational movement. In addition, the reference points positioned in the service area and/or the measurement indicating a distance can be displayed on a user interface. There continues, however, to be a need for the user to be assisted with positioning the calibration device in a manner as practical and precise as possible.

This disclosure has for an aim to provide an apparatus for calibrating a sensor of an advanced driver assistance system of a vehicle to overcome the above mentioned drawbacks of the prior art.

In particular, the aim of this disclosure is to provide an apparatus for calibrating a sensor of an advanced driver assistance system of a vehicle and which is capable of helping the user to position the target, thus increasing the ease, speed, repeatability and efficacy of calibrating operations.

Another aim of this disclosure is to propose an apparatus for calibrating a sensor of an advanced driver assistance system of a vehicle and which is precise, versatile and capable of performing calibration on different ADAS sensors and for different types of vehicles.

This aim is fully achieved by the apparatus of this disclosure as characterized in the appended claims.

In particular, this disclosure provides an apparatus for calibrating a sensor of an advanced driver assistance system - ADAS - of a vehicle operatively positioned in a service area. The apparatus comprises a base unit. The base unit is movable on a supporting surface. Preferably, the base unit is provided with wheels to make it easier to move it on the supporting surface. In an example embodiment, the base unit includes a plurality of wheels rotating about respective axes of rotation. Preferably. at least one wheel of the plurality of wheels can swivel about a respective swivel axis.

In an example embodiment, the apparatus includes a grippable portion which can be held by the operator to drive the support structure manually. Preferably, the grippable portion includes one or more handles. The apparatus comprises a support structure. The support structure is connected to the base unit. The apparatus comprises a calibration device. The calibration device is connected to the support structure. The calibration device is configured to calibrate the ADAS sensor. The calibration device comprises at least one calibration panel. The calibration panel has a front surface which is operatively forward facing, towards the service area. The front surface faces towards the vehicle. The calibration panel may, for example, be a target panel or a screen on which graphical features are represented. The calibration device may comprise a mirror. By "mirror" is meant a surface which is functional to the calibration of the radar sensor of the vehicle. The apparatus comprises a graphical interface. The graphical interface is associated with the support structure. The graphical interface may be physically mounted on the support structure. Alternatively, the graphical interface may be separate from the support structure. For example, the graphical interface may be a tablet or a laptop computer. Note that the graphical interface is a different element from the calibration panel. In particular, the apparatus of the present description includes an embodiment wherein the calibration panel is a display in which are represented predetermined graphical features, depending on the vehicle model and depending on the sensor to be calibrated. In this example, the graphical interface is a further display (different from the display which constitutes the calibration panel). Indeed, preferably, the graphical interface may be mounted behind the calibration panel. Namely, the calibration panel is interposed between the graphical interface and the vehicle. Moreover, as reported above, the graphical interface may be separated from the support structure; namely, as an example, it can be positioned on a movable column or on a working station provided with a laptop. Moreover, the graphical interface may be a tablet of a user. The user can carry the tablet with him and, when he needs to perform the positioning between the support structure and the vehicle, he can place the tablet on a work surface or on a hook on the support structure, so to visualize the images on its own tablet while he positions the support structure.

The apparatus comprises a service camera. The service camera is connected to the support structure. The apparatus comprises a control unit. The control unit is connectable to a controller of the vehicle to perform a calibration procedure on the ADAS sensor. The control unit is connected to the service camera. The control unit is connected to the graphical interface. The control unit is configured to receive image data from the service camera. The service camera is oriented in such a way that a field of view of the service camera includes a part of the service area between the support structure and the vehicle. In an example, the service camera is connected to an upper portion of the support structure. Preferably, the service camera is oriented from top to bottom. The service camera may also include a wide-angle lens, to allow viewing the vehicle and the calibration device and/or support structure simultaneously and sufficiently. The control unit is configured to provide service information, including the images captured by the service camera, in real time, through the graphical interface.

Thus, the control unit is configured (programmed) to display in real time on the graphical interface the image (i.e. a video) of the part of the service area between the support structure and the vehicle. Thanks to this feature, the user can view on the graphical interface, in real time, anything that happens in that part of the service area, which includes a part of the calibration device (and, operatively, a front part of the car) and is critical for the positioning of the support structure correctly in front of the car.

The service camera may be connected to the support structure in such a way as to frame a part of the service area and to make that part of the service area available to a user of the calibration apparatus (that is to say, to the operator who is performing the calibration procedure). In effect, the user works behind the calibration apparatus. By "behind" is meant that the calibration apparatus is placed between the vehicle and the user. Thus, the user is "hidden" and cannot see the space that is available between the vehicle and the calibration apparatus.

The service camera is connected to the support structure so that it is oriented (e.g. with its optical axis) towards the service area and frames a part of the calibration device (or support structure).

In one example, the service camera may be movably connected to the frame, so that ist orientation can be adjusted and kept in a stable fashion (in this way, the orientation of the camera may be adjusted manually by the user).

The operator must also be able to move the apparatus (or, in particular, the calibration device) to a precise position, and to know how much room for manoeuvre there is. For example, the operator must know whether there are any obstacles in the surrounding space or if there are any other operators or whether moving the apparatus will cause it to come into contact with the vehicle itself (when the calibration specifications require a very small distance between the calibration device and the vehicle). This problem is solved by the service camera and by the possibility of viewing the images of the service camera on the graphical interface. Thanks to this solution, the operator can move the calibration apparatus safely while looking at the graphical interface to see how much room there is available. In an example, the field of view of the service camera also includes a part of the calibration device. That way, the space visible to the operator on the graphical interface also specifically includes a part of the calibration device, so that the operator has a better view of the distance between the vehicle and the calibration device. Such a solution may be particularly advantageous in calibration procedures where the vehicle and the calibration device need to be very close to each other.

In an example, the field of view of the service camera includes the space between the mirror and the vehicle. The field of view of the service camera may also include only the space between the vehicle and the calibration panel and/or the mirror (namely, the service camera visualizes only the area in which the calibration panel and the mirror are close to each other). In other words, in this example, the field of view of the service camera includes only the vehicle, a part of the calibration device, and the space interposed therebetween.

Alternatively, in at least one visualization mode, the graphical interface shows the space between the vehicle and the calibration panel and or/the mirror (namely, the service camera visualizes a wide service area, while the control unit and the graphical interface filter the images showing only a specific zone of interest.

Preferably, the graphical interface is configured for showing only the space between the vehicle and the mirror. Indeed, the phase of the calibration of the radar usually needs that the mirror and the radar (which is positioned usually in the front part of the vehicle) are very close to each other. This solution, as mentioned, is advantageous, as it allows the operator to be precise in an area that would otherwise be difficult to visualize while he is moving the support structure. In an example, the apparatus comprises a positioning aid device. The positioning aid device is configured for capturing in real time information regarding the effective mutual position between the vehicle and the apparatus. In an example, the control unit is configured to provide a user with positioning aid information through the graphical interface. In another example, the control unit is configured to provide a user with positioning aid information through the graphical interface only if a predefined criterion is met. The predefined criterion may, for example, be the exceeding of a threshold value, measured by the positioning aid device and representing the distance between the apparatus and the vehicle. The advantage of having the positioning aid device is that, in addition to the images from the service camera, the user can also view information indicating the mutual position (for example, the distance) between the apparatus and the vehicle. That way, the user is provided with additional information (for example, a numeric value) which can be used for the purpose of positioning the apparatus relative to the vehicle at the right calibration position.

In a further example, the graphical interface is configured for showing the space between the vehicle and the calibration panel and/or the mirror as a function of a predetermined parameter, detected by the positioning aid device. For example, said parameter may be a minimum distance. In this way, the operator can macroscopically adjust the relative position between the structure and the vehicle, and only when he approaches with the structure to the vehicle within a certain distance, then the graphical interface shows the area of interest, to complete the positioning with greater precision. In an example, the control unit has access to reference data representing a desired mutual position between the apparatus and the vehicle. In an example, the control unit is programmed to generate the positioning aid information according to the reference data and the information regarding the effective mutual position between the vehicle and the apparatus. The advantage of such a solution is that the control unit has the possibility of knowing not only data which may be a function of the vehicle model and the type of sensor to be calibrated but also data relating to the calibration procedure of a specific vehicle. For example, the reference data might be position data and/or desired coordinates of the calibration device relative to a fixed vehicle reference. The control unit, therefore, is configured to compare such data, which are known beforehand (since they represent a desired mutual position) with the information regarding the effective mutual position between the vehicle and the apparatus, captured by the positioning aid device. Consequently, based on this comparison, the control unit is able to assist the user by generating positioning aid information.

In an example, the control unit has access to commands to be sent to the electronic vehicle controller in order to calibrate the ADAS sensor. It should be noted that the term "electronic vehicle controller" is used to mean a common Electronic Control Unit the vehicle is provided with. Preferably, the control unit can also receive and interpret data returned by the electronic vehicle controller so as to interpret the ADAS sensor calibration result. The calibration result may be displayed on the graphical interface.

In an example, the apparatus comprises a column. The column extends vertically from the base unit. The apparatus comprises a bar which is oriented transversely to the column. The bar is coupled to the column to slide vertically thereon. In an example, the apparatus comprises positioning cameras. The positioning cameras are connected to opposite ends of the bar. The positioning cameras are configured to determine the position of the vehicle inside the working area. Such a solution allows the cameras to be used to frame the vehicle positioned in front of the calibration apparatus. It should be noted that in an example, the support structure is a structure configured to support the calibration panel. The bar and the column are additional supporting elements; they do not necessarily also include the support structure, however. In other words, in at least one embodiment of the apparatus, the term "column" does not denote an element which includes the support structure.

In an example, the control unit is configured to take a measurement of the vehicle alignment by processing images captured by the positioning cameras. Such a solution allows integrating in a single structure the functions of measuring vehicle alignment (usually carried out with a different apparatus) and calibrating the ADAS sensor. A single, integrated structure is more compact and functional.

In an example, the control unit is programmed to control the graphical interface so that the service information and the positioning aid information can be displayed in combination or alternatively. It should be noted that by "displaying information on the graphical interface" means displaying it on a screen page or on a display of an electronic device. For example, the page may form part of a screen of a tablet, smartphone, television set or other device capable allowing images and/or visual information to be viewed. The graphical interface may include a plurality of pages. Each page is configured so that the service information and the positioning aid information can be displayed in combination or alternatively. The possibility of displaying the service information and the positioning aid information in combination or alternatively has the advantage of allowing the control unit to manage the graphical interface and to provide the user with the information in the most suitable manner.

In an example, the service camera is connected to the bar. In an example, the service camera is connected to an end of the bar so as to laterally frame a part of the service area located between the support structure and the vehicle.

In an example, the control unit is configured to show a plurality of types of information through the graphical interface. The plurality of types of information may include:
- a first type of information, consisting of service information;
- a second type of information, consisting of procedural information, representing instructions concerning the ADAS calibration procedure for the user. It should be noted that the term "type of information" is used to mean a group or set of homogeneous information items. For example, by "service information" is meant information relating to the service camera (the images provided by the service camera). On the other hand, "procedural information" may include any instruction to help the user with the calibration procedure. Such procedural information may be managed by a software program configured to perform a series of predetermined steps. It should also be noted that the graphical interface may show the service information type in combination with the procedural information type.

In an example, the control unit is programmed to divide the screen of the graphical interface into two or more zones, so as to display two or more types of information of the plurality of types of information simultaneously in respective zones of the plurality of zones. Such a solution allows the plurality of types of information to be viewed simultaneously. That way, it is more practical for the user to follow the calibration procedural instructions and, at the same time, display the images provided by the camera.

In an example, a first zone of the plurality of zones has a portion which extends downwards with respect to a second zone of the plurality of zones. In an example, the user and/or the control unit may enlarge or reduce the size of one or more zones of the plurality of zones.

In an example, the control unit is programmed to allow the user to select a type of information of the plurality of types of information. In an example, the control unit is programmed to display on the graphical interface the selected type of information instead of, or in addition to, the other types of information. Such a solution allows the user to exercise control over the choice of information type. In other words, the user can override the control unit and choose to display the plurality of information types at will. The user's choice may be exercised not only when the control unit is displaying a single type of information but also when two or more types of information are being displayed on the graphical interface. The user's selection makes the calibration procedure easier and more effective. It should be noted that the information type may be selected only in some of the pages of the graphical interface. This possibility allows optimizing display space in each page, providing the right information at the right time.

In an example, the control unit is programmed to select a type of information of the plurality of types of information based on a predetermined criterion and/or responsive to a predetermined condition being met. The predetermined criterion may be the recognition of a specific step of calibration. In an example, the control unit is programmed to display on the graphical interface the selected type of information instead of, or in addition to, the other types of information. This solution may be advantageous because it tends to speed up the calibration process. In effect, the control unit is able to know a predetermined criterion or condition beforehand and, based on such criterion or condition, is able to choose the type of information to be displayed on the graphical interface. For example, if the apparatus moves towards the vehicle or obstacle closer than a threshold distance, the control unit may force the camera and/or an alarm signal to be displayed. By "alarm signal" is meant, for example, a luminous or acoustic alerting indication.

In an example, the control unit is programmed to perform a calibration procedure following predefined steps. Following this procedure, the control unit is configured to display, by default, a type of information of the plurality of types of information corresponding to the specific step of the calibration procedure that the control unit is performing. In this example, depending on the calibration step which the control unit is performing, the control unit may also enable or disable the user's option to select.

In an example, the apparatus comprises an illuminator device. The illuminator device is connected to the support structure.

Preferably, the illuminator is provided in an upper portion of the support structure. The illuminator device is configured to project an optical reference, for example, a laser blade, onto the vehicle. The illuminator device is configured to facilitate mutual positioning between the vehicle and the calibration device. In an example, the illuminator device is configured to project a first laser blade and a second laser blade, orthogonal to the first. Thus, the illuminator may project an optical "cross" reference, where the first laser blade may be parallel to the axis of the vehicle and the second laser blade is perpendicular to the first. Such a solution makes it easier to align the calibration device relative to the vehicle. In an example, the service camera is mounted on the support structure. In an example, the service camera is mounted at a position above the illuminator device with respect to a vertical direction. In another example, the service camera is mounted at a position under the illuminator device. Such a solution allows using an optical reference projected onto the vehicle to facilitate aligning the vehicle with the calibration apparatus. In an example, the service camera is not aligned with the illuminator so that the laser blade of the illuminator is not obstructed by the camera and, at the same time, the field of view of the camera is not obstructed by the illuminator device.

According to an aspect of it, this disclosure provides a method for calibrating a sensor of an advanced driver assistance system - ADAS - of a vehicle operatively positioned in a service area. The method comprises a step of providing a support structure, connected to a base unit which is movable relative to a supporting surface. The method comprises a step of providing a calibration device to calibrate the ADAS sensor, connected to the support structure and including a calibration panel having a front surface which is operatively forward facing, towards the service area (that is, towards the vehicle). The method comprises a step of providing graphical interface, associated with support structure. The method comprises a step, via a control unit which is connectable to a controller of the vehicle, of performing a calibration procedure on the ADAS sensor. The method comprises a step of providing a service camera, connected to the support structure and oriented towards the service area so as to frame a part of the vehicle. The method comprises a step of displaying on the graphical interface image data captured in real time by the service camera. In an example, the control unit displays on the graphical interface a plurality of types of information. The plurality of types of information includes two or more of the following types of information:
- service information;
- procedural information, representing instructions concerning the ADAS calibration procedure for the user;
- positioning aid information, to help the user with manually positioning the vehicle and the calibration device relative to each other. The control unit controls the graphical interface so that the types of information of the plurality of types of information can be displayed in combination or alternatively.

In an example, the service camera frames a part of the calibration device and a part of the vehicle simultaneously in its field of view.

These and other features are more apparent from the following description of a preferred embodiment, illustrated by way of non-limiting example in the accompanying drawings, in which:

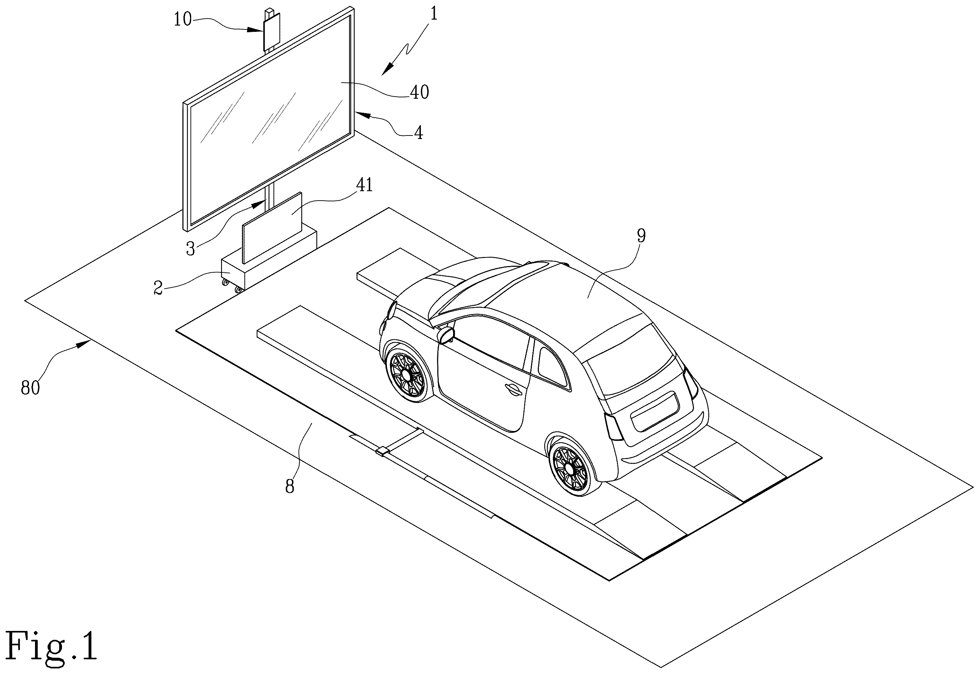

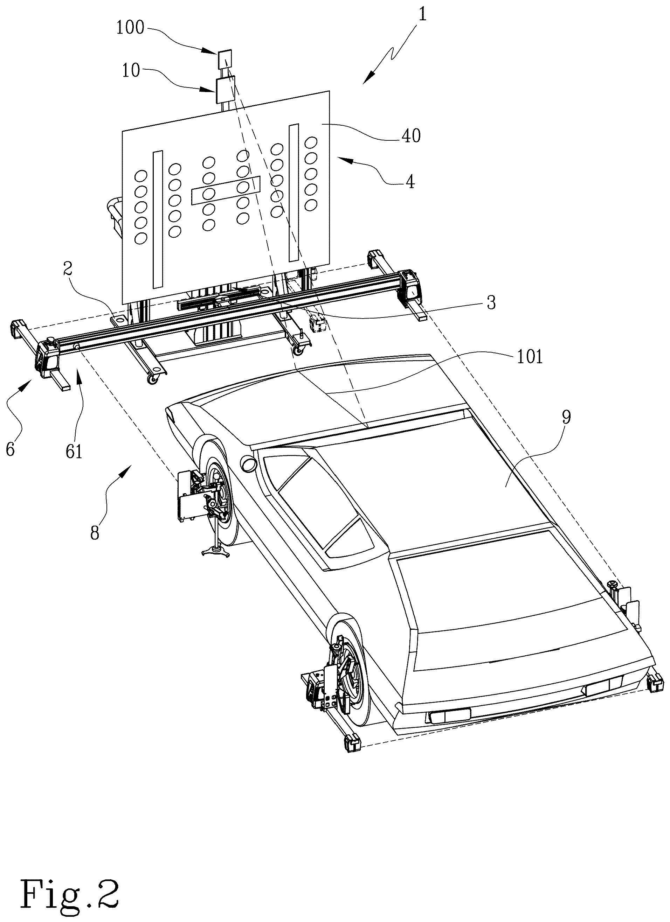

- Figures 1 and 2 are overall layout views of two possible embodiments of an apparatus for calibrating an ADAS sensor;

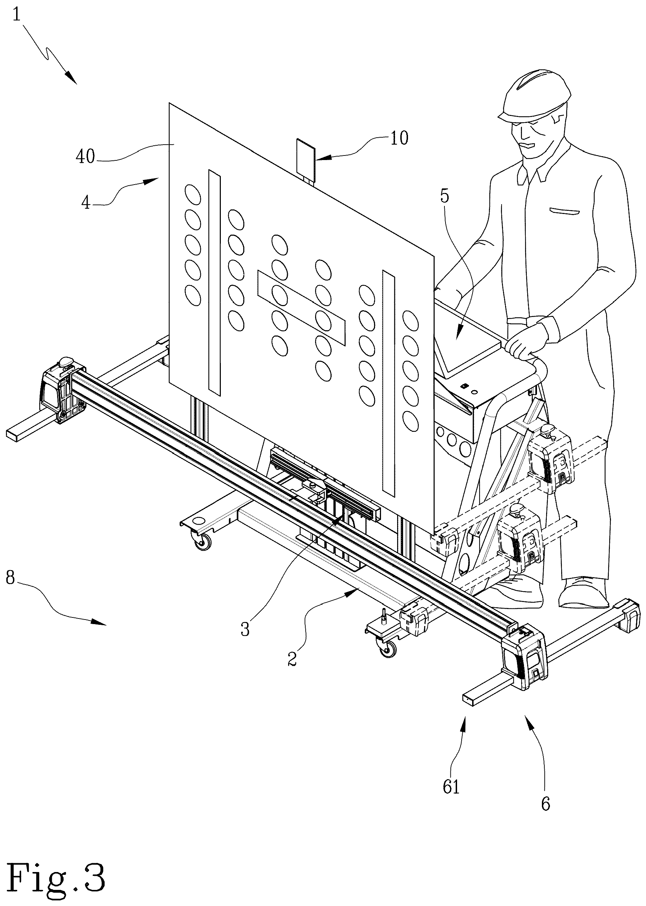

- Figure 3 shows an apparatus for calibrating an ADAS sensor and an operator interacting with the apparatus;
- Figures 4 and 5 show a particular embodiment of the apparatus for calibrating an ADAS sensor;

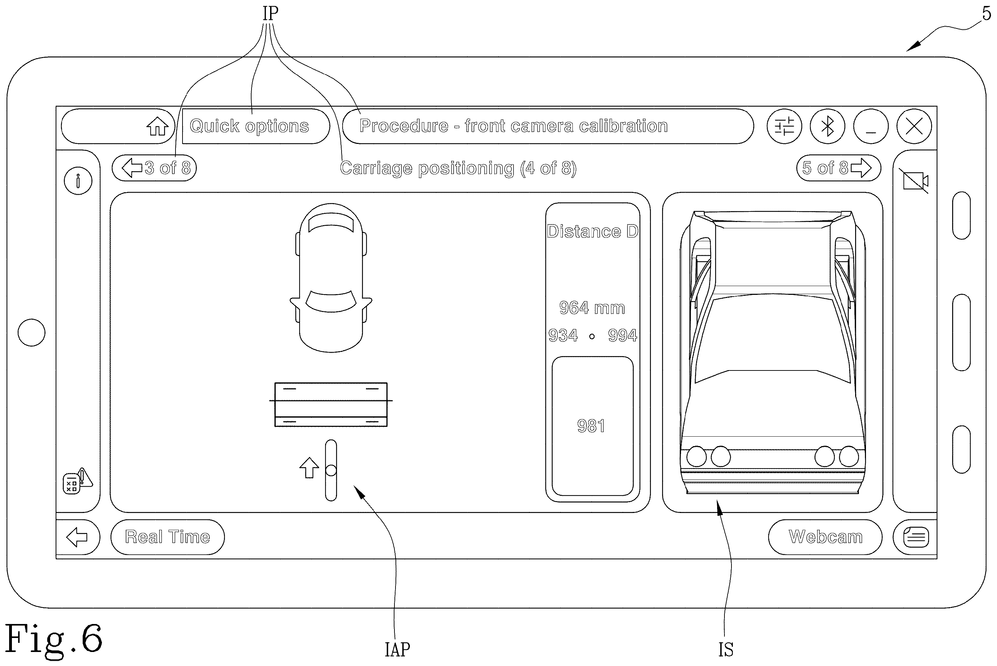

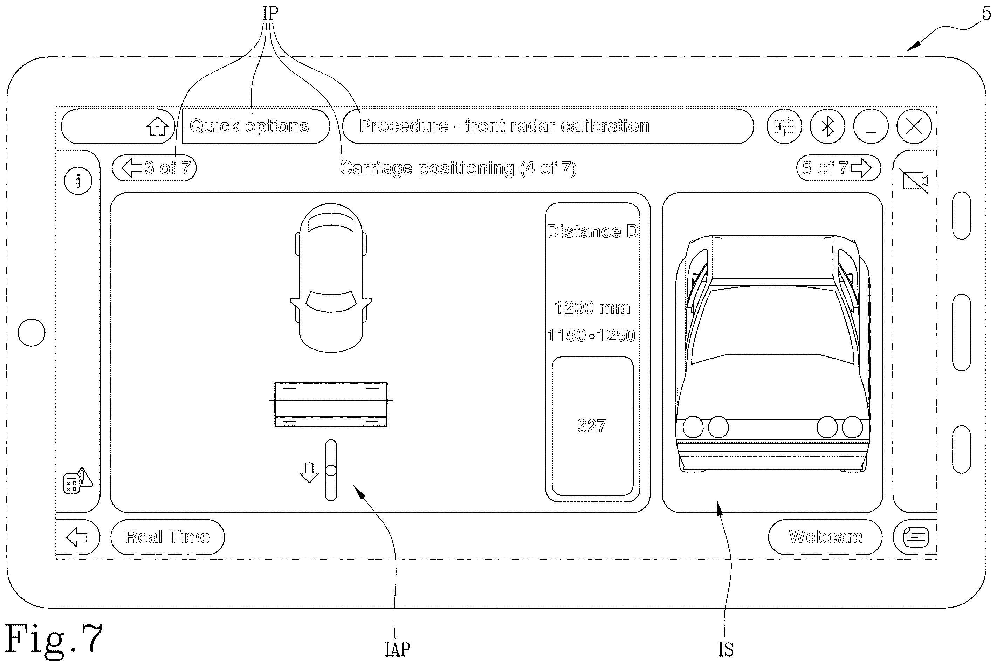

- Figures 6 and 7 show a possible configuration of a graphical interface;

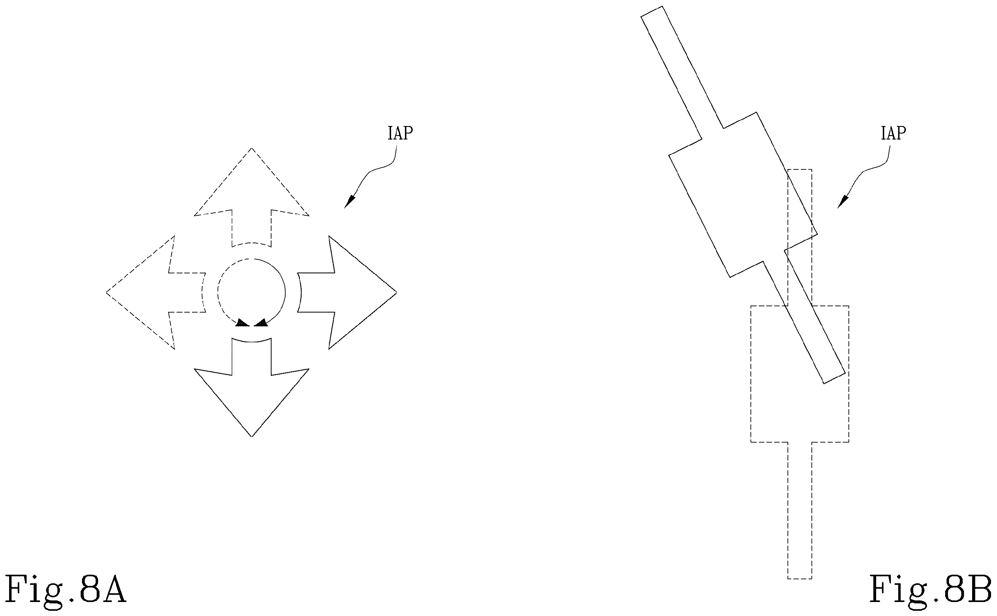

- Figures 8A and 8B show possible positioning aid information.

The numeral 1 in the drawings denotes an apparatus for calibrating a sensor of an advanced driver assistance system - ADAS - of a vehicle 9 operatively positioned in a service area 8. The apparatus 1 comprises a base unit 2 movable on a supporting surface 80. Preferably, the base unit 2 is provided with wheels to make it easier to move. In an example embodiment, the base unit includes a plurality of wheels rotating about respective axes of rotation. Preferably. at least one wheel of the plurality of wheels can swivel about a respective swivel axis.

In an embodiment, the apparatus 1 includes a grippable portion which can be held by the operator to drive the support structure manually. Preferably, the grippable portion includes one or more handles. The apparatus 1 comprises a support structure 3 connected to the base unit 2. The apparatus 1 comprises a calibration device 4, connected to the support structure 3 and configured to calibrate the ADAS sensor. The calibration device 4 comprises at least one calibration panel 40 having a front surface which is operatively forward facing, towards the service area 8, that is, towards the vehicle 9. The calibration device 4 may include a mirror 41, configured for calibrating a radar sensor of the vehicle 9. The apparatus 1 comprises a graphical interface 5, associated with the support structure 3. It should be noted that the term "associated with", relating to a graphical interface 5, may be used to denote both a direct connection and an indirect connection to the apparatus 1 or to the support structure 3. The graphical interface may be physically mounted on the apparatus 1. In an example, the graphical interface 5 is a stand-alone element. For example, it may be a tablet held in the user's hand, or another device not mounted directly on the base unit 2 or on the support structure 3.

In an example, the graphical interface 5 is mounted on the support structure 3. Alternatively, the graphical interface 5 is integral with the base unit 2. In another example, the graphical interface 5 is separate from the base unit 2 and from the support structure 3, and is positioned on another support, which is movable relative to the support structure 3. The apparatus 1 comprises a service camera 10, connected to the support structure 3. The service camera 10 is oriented in such a way that a field of view of the service camera 10 includes a part of the service area between the support structure 3 and the vehicle 9. The apparatus 1 comprises a control unit which is connectable to a controller of the vehicle 9 to perform a calibration procedure on the ADAS sensor. The control unit is connected to the service camera 10 and to the graphical interface 5 to receive image data from the service camera 10. The connection may be made using cables or by transmission of electromagnetic signals, that is to say, in wireless mode. The control unit is configured to provide service information IS including the images captured by the service camera 10 in real time through the graphical interface 5.

In an example, the field of view of the service camera 10 also includes a part of the calibration device 4. Preferably, the field of view of the service camera 10 also includes the calibration panel 40 and/or the mirror 41 for calibrating the radar.

In an example, the apparatus 1 comprises a positioning aid device 6, configured for capturing, in real time, information regarding the effective mutual position between the vehicle 9 and the apparatus 1. The positioning aid device 6 may be a distance meter or other distance measuring sensor. For example, the positioning aid device 6 may be a head 61. In other solutions a manual tape measure may be used (for example, a rigid tape measure or a flexible tape measure). The control unit is configured to provide a user with positioning aid information IAP through the graphical interface 5. The positioning aid device 6 is configured to exchange information with the control unit. That way, the control unit may make such information available on the graphical interface 5. The positioning aid information IAP may be, for example, a number indicating a distance. The positioning aid information IAP may comprise information reprocessed by the control unit. For example, the control unit is configured to show arrows, luminous signals or other types of information indicating the positioning of the apparatus 1 or of the calibration device 4. In an example, the control unit has access to reference data representing a desired mutual position between the apparatus 1 and the vehicle 9, and is programmed to generate the positioning aid information IAP according to the reference data and the information regarding the effective mutual position between the vehicle 9 and the apparatus 1. The control unit may have a memory or it may have access to a dataset from which to extrapolate the reference data. The reference data may, for example, include the make, model and dimensional features of the vehicle whose ADAS sensors must be calibrated. The reference data may also include the make, model and features of the ADAS sensor to be calibrated. Depending on the model of the vehicle and/or of the sensor, the reference data may include a specific desired position of the calibration device 4. The positioning aid information IAP may comprise information for the user to move the calibration device4 in a predefined direction, or information to move it by rotation about a predefined axis.

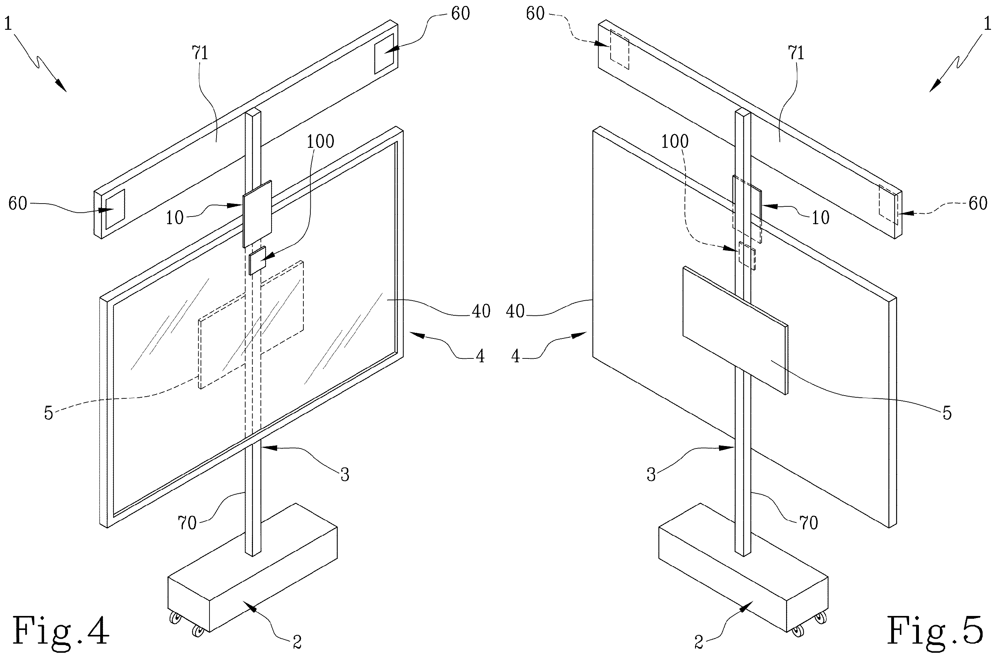

In the example of Figure 4 and Figure 5, the apparatus comprises:
- a column 70, extending vertically from the base unit 2;
- a bar 71 which is oriented transversely to the column 70 and is coupled to it to slide vertically thereon;
- positioning cameras 60 connected to opposite ends of the bar 71.

In an example, the control unit is configured to take a measurement of the alignment of the vehicle 9 by processing images captured by the positioning cameras 60. The cameras positioned on the bar 71 may be configured to display targets positioned on the wheels of the vehicle 9 and to assist the user with performing alignment of the vehicle 9.

In an example, the control unit is programmed to control the graphical interface 5 so that the service information IS and the positioning aid information IAP can be displayed in combination or alternatively. The user can display a page of the graphical interface 5. On one page, the control unit may show only the service information IS (that is, only the images from the camera in real time) or only the positioning aid information IAP. Alternatively, the control unit may show both the images from the camera and the positioning aid information IAP on the same page.

In an example, the control unit is configured to show, through the graphical interface 5, a plurality of types of information, comprising:
- a first type of information, consisting of service information IS;
- a second type of information, consisting of procedural information IP, representing instructions concerning the ADAS calibration procedure for the user.

In an example, the control unit is programmed to divide the screen of the graphical interface 5 into two or more zones, so as to display two or more types of information of the plurality of types of information simultaneously in respective zones of the plurality of zones. The graphical interface 5 may have a display mode of the split-screen type. Alternatively, the graphical interface 5 may have a display mode of the picture-in-picture type. Preferably, the graphical interface 5 can be divided into two or three windows. In an example, the screen is divided into three windows and each window shows, respectively, the service information IS, the positioning aid information IAP and the procedural information IP.

In an example, the control unit is programmed to allow the user to select a type of information of the plurality of types of information, and to display on the graphical interface 5 the selected type of information instead of, or in addition to, the other types of information. The user may override a selection made by the control unit and may choose the type of information or the types of information they prefer. For example, the user may select the service information IS and the positioning aid information IAP. Alternatively, the user may select the service information IS and the procedural instructions.

In an example, the control unit is programmed to select a type of information of the plurality of types of information based on a predetermined criterion and/or responsive to a predetermined condition being met, and to display on the graphical interface 5 the selected type of information instead of, or in addition to, the other types of information. In an example, the apparatus includes a proximity sensor. The control unit is configured to receive a signal from the proximity sensor, indicating, for example, the distance between the vehicle 9 and the calibration panel 41. The control unit is also configured to switch the information display option chosen by the user to that chosen by the control unit, or vice versa.

In an example, the apparatus 1 comprises an illuminator device 100, connected to the support structure 3 and configured to project an optical reference, for example, a laser blade 101, onto the vehicle 9. The illuminator device 100 is configured to facilitate mutual positioning between the vehicle 9 and the calibration device 4. The service camera 10 is mounted on the support structure 3 at a position above the illuminator device 100 with respect to a vertical direction. Alternatively, the service camera 10 may be mounted on the support structure 3 at a position below the illuminator device 100.

In an example, the illuminator 100 is configured to project the optical reference on the front of the vehicle 9 and/or on the roof of the vehicle 9. In an example, the service camera 10 is configured to display, in its field of view, the optical reference of the illuminator 100.

In an example, the apparatus 1 includes an additional illuminator. The additional illuminator is associated with the service camera 10. The additional illuminator is configured to emit light to illuminate at least part of the service area 8. Such a solution allows the user or the control unit to activate a flash for a certain length of time to better illuminate a portion of the service area 8 where the user has to position the apparatus 1 or the calibration device 4. The length of time may be predefined or controllable by the user.

This disclosure also provides a method for calibrating a sensor of an advanced driver assistance system - ADAS - of a vehicle 9 operatively positioned in a service area 8. The method comprises a step of providing:
- a support structure 3, connected to a base unit 2 which is movable relative to a supporting surface 80;
- a calibration device 4 to calibrate the ADAS sensor, connected to the support structure 3 and including a calibration panel 40 having a front surface which is operatively forward facing, towards the service area 8;
- a graphical interface 5 associated with the support structure 3.

The method comprises a step, via a control unit which is connectable to a controller of the vehicle 9, of performing a calibration procedure on the ADAS sensor. The calibration procedure comprise a series of predefined steps whereby the sensor is calibrated through interaction between the sensor of the vehicle 9 and the calibration device 4.

The method comprises a step of providing a service camera 10, connected to the support structure 3 and oriented towards the service area 8 so as to frame a part of the vehicle 9. In an example, the service camera 10 frames a part of the service area 8 between the support structure 3 and the vehicle 9. The method also comprises a step of displaying on the graphical interface 5 image data captured in real time by the service camera 10.

In an example, the method comprises a step in which the control unit displays a plurality of types of information on the graphical interface 5. The plurality of types of information includes two or more of the following types of information:
- service information IS;
- procedural information IP, representing instructions concerning the ADAS calibration procedure for the user;
- positioning aid information IAP, to help the user with manually positioning the vehicle 9 and the calibration device 4 relative to each other.

The control unit controls the graphical interface 5 so that the types of information of the plurality of types of information can be displayed in combination or alternatively.

In an example, the service camera 10 frames a part of the calibration device 4 and a part of the vehicle 9 simultaneously in its field of view.

## Claims

1. An apparatus (1) for calibrating a sensor of an advanced driver assistance system - ADAS - of a vehicle (9) operatively positioned in a service area (8), comprising:
- a base unit (2), movable on a supporting surface (80);
- a support structure (3), connected to the base unit (2);
- a calibration device (4), connected to the support structure (3) and configured to calibrate the ADAS sensor, the calibration device (4) comprising at least one calibration panel (40) having a front surface which is operatively forward facing, towards the service area (8);
- a graphical interface (5), associated with the support structure (3);
- a service camera (10), connected to the support structure (3);
- a control unit, connectable to a controller of the vehicle (9) to perform a calibration procedure on the ADAS sensor, the control unit being connected to the service camera (10) and to the graphical interface (5) to receive image data from the service camera (10); the apparatus (1) being **characterized in that** the service camera (10) is oriented in such a way that a field of view of the service camera (10) includes a part of the service area between the support structure (3) and the vehicle (9), and **in that** the control unit is configured to provide service information (IS), including the images captured by the service camera (10), in real time through the graphical interface (5).

2. The apparatus (1) according to claim 1, wherein the field of view of the service camera (10) also includes a part of the calibration device (4).

3. The apparatus (1) according to claim 2, comprising a positioning aid device (6), configured for capturing in real time information regarding the effective mutual position between the vehicle (9) and the apparatus (1), wherein the control unit is configured to provide a user with positioning aid information (IAP) through the graphical interface (5).

4. The apparatus (1) according to claim 3, wherein the control unit has access to reference data representing a desired mutual position between the apparatus (1) and the vehicle (9), and is programmed to generate the positioning aid information (IAP) according to the reference data and the information regarding the effective mutual position between the vehicle (9) and the apparatus (1).

5. The apparatus (1) according to claim 3 or 4, comprising:
- a column (70), extending vertically from the base unit (2);
- a bar (71) which is oriented transversely to the column (70) and is coupled to it to slide vertically thereon;
- positioning cameras (60) connected to opposite ends of the bar (71), to determine the position of the vehicle (9) inside the working area (8).

6. The apparatus (1) according to claim 5, wherein the control unit is configured to take a measurement of the alignment of the vehicle (9) by processing images captured by the positioning cameras (60).

7. The apparatus (1) according to any one of claims 3 to 6, wherein the control unit is programmed to control the graphical interface (5) so that the service information (IS) and the positioning aid information (IAP) can be displayed in combination or alternatively.

8. The apparatus (1) according to any one of the preceding claims, wherein the control unit is configured to show, through the graphical interface (5), a plurality of types of information, the plurality of types of information including:
- a first type of information, consisting of service information (IS);
- a second type of information, consisting of procedural information (IP), representing instructions concerning the ADAS calibration procedure for the user.

9. The apparatus (1) according to claim 8, wherein the control unit is programmed to divide the screen of the graphical interface (5) into two or more zones, so as to display two or more types of information of the plurality of types of information simultaneously in respective zones of the plurality of zones.

10. The apparatus according to claim 8 or 9, wherein the control unit is programmed:
- to allow the user to select a type of information of the plurality of types of information,
- to display on the graphical interface (5) the selected type of information instead of, or in addition to, the other types of information.

11. The apparatus according to any one of claims 8 to 10, wherein the control unit is programmed:
- to select a type of information of the plurality of types of information based on a predetermined criterion and/or responsive to a predetermined condition being met,
- to display on the graphical interface (5) the selected type of information instead of, or in addition to, the other types of information.

12. The apparatus (1) according to any one of the preceding claims, comprising an illuminator device (100), connected to the support structure (3) and configured to project an optical reference onto the vehicle (9), to facilitate mutual positioning between the vehicle (9) and the calibration device (4), and wherein the service camera (10) is mounted on the support structure (3) in alignment with the illuminator device (100) with respect to a vertical direction.

13. A method for calibrating a sensor of an advanced driver assistance system - ADAS - of a vehicle (9) operatively positioned in a service area (8), comprising the following steps:
- providing a support structure (3), connected to a base unit (2) which is movable relative to a supporting surface (80), and a calibration device (4) to calibrate the ADAS sensor, connected to the support structure (3) and including a calibration panel (40) having a front surface which is operatively forward facing, towards the service area (8), a graphical interface (5) associated with the support structure (3);
- via a control unit which is connectable to a controller of the vehicle (9), performing a calibration procedure on the ADAS sensor;
the method being **characterized in that** it further comprises the following steps:
- providing a service camera (10), connected to the support structure (3) and oriented towards the service area (8) so as to frame a part of the vehicle (9);
- displaying on the graphical interface (5) service information (IS) which comprises image data captured in real time by the service camera (10).

14. The method according to claim 13, wherein the control unit displays on the graphical interface (5) a plurality of types of information, the plurality of types of information including two or more of the following types of information:
- service information (IS);
- procedural information (IP), representing instructions concerning the ADAS calibration procedure for the user;
- positioning aid information (IAP), to help the user with manually positioning the vehicle (9) and the calibration device (4) relative to each other;
wherein the control unit controls the graphical interface (5) so that the types of information of the plurality of types of information can be displayed in combination or alternatively.

15. The method according to claim 13 or 14, wherein the service camera (10) frames a part of the calibration device (4) and a part of the vehicle simultaneously in its field of view.
